Europäisches Patentamt

(19) European Patent Office

Office européen des brevets

(11) EP 0 604 025 B1

## (12) EUROPEAN PATENT SPECIFICATION

(45) Date of publication and mention
of the grant of the patent:
**27.01.1999 Bulletin 1999/04**

(21) Application number: **93309426.0**

(22) Date of filing: **25.11.1993**

(51) Int. Cl.⁶: $B41M\ 5/00$, $B41M\ 3/00$,
$B41M\ 7/00$, $C09D\ 11/00$,
$B41J\ 2/00$

(54) **Imaging process**

Bildherstellungsverfahren

Procédé de formation d'images

(84) Designated Contracting States:
**CH DE FR GB IT LI**

(30) Priority: **25.11.1992 US 981646**
**25.11.1992 US 981677**
**19.01.1993 US 5970**

(43) Date of publication of application:
**29.06.1994 Bulletin 1994/26**

(73) Proprietor: **TEKTRONIX, INC.**
**Wilsonville, Oregon 97070-1000 (US)**

(72) Inventors:
• **Bui, Loc V.**
**Portland, Oregon 97219 (US)**
• **Titterington, Donald R.**
**Tualatin, Oregon 97062 (US)**
• **Rise, James R.**
**Lake Oswego, Oregon 97034 (US)**
• **Jaeger, Wayne C.**
**Beaverton, Oregon 97007 (US)**
• **Mutton, Jon C.**
**Milwaukie, Oregon 97267 (US)**
• **Le, Hue P.**
**Beaverton, Oregon 97007 (US)**

(74) Representative:
**Lawrence, Malcolm Graham et al**
**Hepworth, Lawrence, Bryer & Bizley**
**Merlin House**
**Falconry Court**
**Baker's Lane**
**Epping Essex CM16 5DQ (GB)**

(56) References cited:
**EP-A- 0 435 675** **EP-A- 0 583 168**

• **PATENT ABSTRACTS OF JAPAN vol. 13, no. 405
(M-868) 7 September 1989 & JP-A-01 146 750
(SEIKO EPSON CORP.) 8 June 1989**
• **PATENT ABSTRACTS OF JAPAN vol. 14, no. 281
(M-0986) 18 June 1990 & JP-A-02 086 453 (FUJI
XEROX CO LTD.) 27 March 1990**
• **PATENT ABSTRACTS OF JAPAN vol. 17, no. 537
(M-1487) 28 September 1993 & JP-A-05 147 209
(RICOH CO LTD.) 15 June 1993**

## Description

This invention relates generally to an imaging process. More specifically, this invention relates to a ink jet printing system and process utilizing an intermediate transfer surface.

Ink jet printing systems have been employed utilizing intermediate transfer surfaces, such as that disclosed in U.S. Patent No. 4,538,156 to Durkee et al. This patent discloses a system wherein an intermediate transfer drum is employed with a printhead. A final receiving surface of paper is brought into contact with the intermediate transfer drum after the image has been placed thereon by the nozzles in the printhead. The image is then transferred to the final receiving surface.

U.S. Patent No. 5,099,256 to Anderson describes an intermediate drum with a surface which receives ink droplets from a printhead. The intermediate drum surface is thermally conductive and formed from a suitable film-forming silicone polymer allegedly having a high surface energy and high degree of surface roughness to prevent movement of the ink droplets after receipt from the printhead nozzles. Other imaging patents, such as U.S. Patent Nos. 4,731,647 and 4,833,530 to Kohsahi, disclose a solvent which is deposited on colorant to dissolve the colorant and form a transferable drop to a recording medium. The colorants are deposited directly onto paper or plastic colorant transfer sheets. The transferable drops are then contact transferred to the final receiving surface medium, such as paper.

U.S. Patent No. 4,673,303 to Sansone et al. discloses an offset ink jet postage printing method and apparatus in which an inking roll applies ink to the first region of a dye plate. A lubricating hydrophilic oil can be applied to the exterior surface of the printing drum or roll to facilitate the accurate transfer of the images from the drum or roll to the receiving surface.

All of these processes do not achieve a complete image transfer from the intermediate transfer surface and, therefore, require a separate cleaning step to remove any residual ink from the intermediate receiving surface. The inclusion of cleaning apparatus is both costly and time consuming in color printing equipment. Prior intermediate transfer surfaces also have not been renewable.

In JP-A-1-146750 a liquid layer of aqueous glycerine solution is coated on a supporting surface (a drum) to provide an intermediate transfer surface. An image is provided on the transfer surface by means of an ink jet printer. The image is then transferred to by rotation of the drum to fix the image on a carrier.

Also, all of these prior processes are limited in the degree of image quality which can be achieved on different types of final receiving surfaces or print media. Since the inks are fluids, they are subject to uncontrolled bleeding on porous media, such as paper, and uncontrolled spreading on transparency films or glossy coated papers.

These problems are solved in the process and apparatus of the present invention by providing an apparatus and process which supplies a liquid layer as the intermediate transfer surface on a supporting surface for the transferred image. The image is then transferred with at least a portion of the liquid layer from the liquid layer to a final receiving medium. The image is formed from a phase change ink. The apparatus and process produce uniformly high quality images on a wide range of media through the use of phase change ink that is transferred to the final receiving substrate or medium in a malleable solid state.

As will be appreciated from the description which follows with reference to the drawings, the invention provides an improved imaging method and apparatus which allows high quality imaging on a variety of media and obviates the need for separate cleaning apparatus and a separate cleaning step. A liquid layer is utilized on a supporting surface which receives the image to be transferred prior to transferring the image to a final receiving medium, which may be a transparency, paper or other suitable media. The liquid layer is a sacrificial layer on the supporting surface which can at least partially be transferred with the transferred image to the final receiving medium.

It will further be appreciated from the description with reference to the drawings that the liquid layer acts as a release-agent on the supporting surface.

The liquid layer can be selected from the group consisting of water, fluorinated oil, glycol, surfactant, mineral oil, silicone oil, functional oil and combinations thereof.

It will additionally be appreciated that the invention provides that a simple path for the paper or final receiving medium through the imaging apparatus is presented to thereby minimize both the expense and the mechanical parts for paper or final medium handling and the amount of time needed for the apparatus to handle the final receiving medium.

The liquid layer is preferably replenishable on the supporting surface for subsequent images and it is preferred that it be at least partially transferred with the image to the image receiving medium.

The liquid layer which serves as the intermediate transfer layer is conveniently sufficiently thick that a multiplicity of images can be transferred before it is necessary to replenish the liquid layer that is present on the supporting surface.

It is a particular feature of the invention as will be appreciated from the description with reference to the drawings that the supporting surface can be made so as not to require cleaning prior to re-imaging with a different color or the same color.

The present invention in its preferred embodiments at least enables that high quality images can be produced on a variety of final receiving surfaces or media.

According to the invention, a liquid layer is applied to a supporting surface such that the liquid layer has at least a first surface not in contact with the supporting surface which receives the image formed of phase change ink composition to be transferred thereon and the transferring of that image to a final receiving medium then takes place.

In a second aspect, the invention provides a method of imaging which method comprises (a) imaging a liquid transfer surface with a phase change ink deposit by applying heat to change the phase change ink from a solid state to a liquid state and applying said liquid phase change ink to said surface; (b) cooling the so-applied phase change ink from the liquid state to a malleable solid condition; (c) transferring the re-solidified phase change ink deposit in the malleable condition to a receiving medium; and (d) cooling the phase change ink deposit on the receiving medium to a ductile condition in the solid state so that the phase change ink will yield without fracturing.

The invention will now be described, by way of example only, with reference to the accompanying drawings wherein:

FIG. 1 is a diagrammatic illustration of the apparatus having a supporting surface adjacent a liquid layer applicator and a print head which applies the image to be transferred to the liquid layer;

FIG. 2 is an enlarged diagrammatic illustration of the liquid layer acting as an intermediate transfer surface supporting the ink; and

FIG. 3 is an enlarged diagrammatic illustration of the transfer of the inked image from the liquid intermediate transfer surface to a final receiving surface.

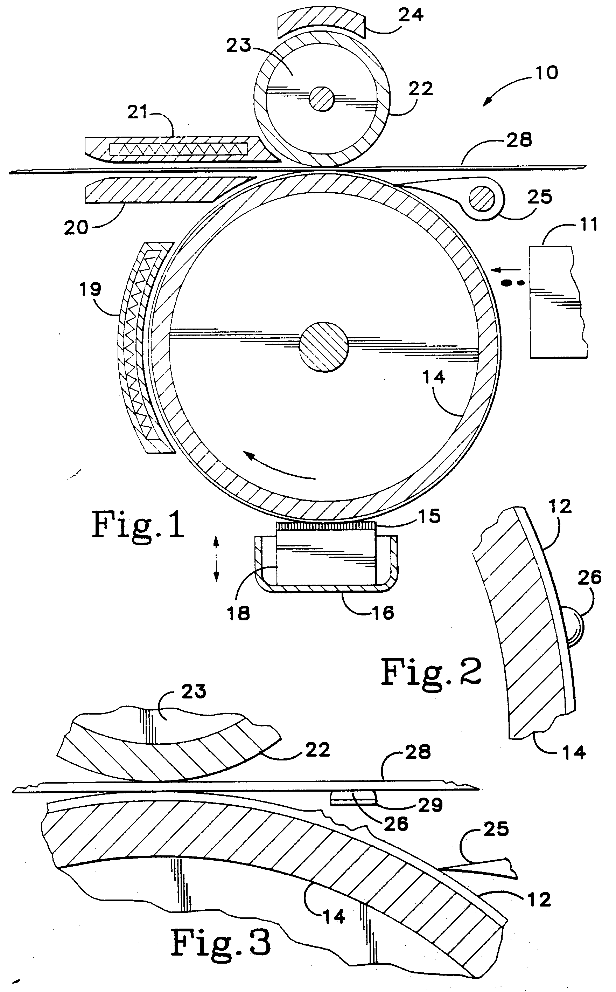

FIG 1 discloses a diagrammatical illustration of the imaging apparatus 10 utilized in the instant process to transfer an inked image from an intermediate transfer surface to a final receiving substrate. A printhead 11 is supported by an appropriate housing and support elements (not shown) for either stationary or moving utilization to place an ink in the liquid or molten state on the supporting intermediate transfer surface 12 of FIGS 2 and 3 that is applied to the surface of the supporting surface 14. Intermediate transfer surface 12 is a liquid layer that is applied to the supporting surface 14, which is shown as a drum, but may also be a web, platen, or any other suitable design, by contact with an applicator, such as a metering blade, roller, web or the shown wicking pad 15 contained within applicator assembly 16. The supporting surface 14 may be formed from any appropriate material, such as metals including but not limited to aluminum, nickel or iron phosphate, elastomers including but not limited to fluoroelastomers, perfluoroelastomers, silicone rubber and polybutadiene, plastics including but not limited to polytetrafluoroethylene loaded with polyphenylene sulfide, thermoplastics such as polyethylene, nylon, and FEP (fluorinated ethylene propylene), thermosets such as acetals, or ceramics could be employed as long as the exposed surface is sufficiently rigid to deform the transferred image-forming ink 26 when the final receiving medium passes between it and the transfer and fixing roller 22 and sufficiently smooth so as not to interfere with the ability of the intermediate transfer surface or liquid layer to support the image-forming ink 26 of FIG 2. The preferred material is anodized aluminum.

Applicator assembly 16 optionally contains a reservoir and wicking pad 15 for the liquid and most preferably contains a web and web advancing mechanism (both not shown) to periodically present fresh web for contact with the drum 14. Wicking pad 15 or the web is preferably any appropriate nonwoven synthetic textile with a relatively smooth surface. The web can be polyester. A preferred configuration can employ the smooth wicking pad 15 mounted atop a porous supporting material 18, such as a polyester felt. Both materials are available from BMP Corporation as BMP products NR90 and PE 1100-UL, respectively (BMP Corporation, c/o BMP America, 11625 Maple Ridge Road, Medina, New York, NY 14103, USA). Applicator apparatus 16 is mounted for retractable movement upward into contact with the surface of drum 14 and downwardly out of contact with the surface of the drum 14 and its liquid layer 12 by means of appropriate mechanism, such as an air cylinder or an electrically actuated solenoid.

FIG 1 shows a final substrate guide 20 that passes the final receiving substrate 28, such as paper, from a positive feed device (not shown) and guides it through the nip formed by the opposing arcuate surfaces of the roller 22 and the intermediate transfer surface 12 supported by the drum 14. Stripper fingers 25 (only one of which is shown) may be pivotally mounted to the imaging apparatus 10 to assist in removing any paper or other final receiving substrate media from the exposed surface of the liquid layer forming the intermediate transfer surface 12. Roller 22 has a metallic core, preferably steel, with an elastomeric covering that has a 40 to 45 Shore D rating. Suitable elastomeric covering materials include silicones, urethanes, nitriles, EPDM and other appropriately resilient materials. The elastomeric covering on roller 22 engages the final receiving substrate 20 on the reverse side to which the ink image 26 is transferred from the exposed surface of the liquid layer forming the intermediate transfer surface 12. This fuses or fixes the ink image 26 to the surface of the final receiving surface so that the ink image is spread, flattened and adhered.

The ink utilized in the process and system of the instant invention is preferably initially in solid form and is then changed to a molten state by the application of heat energy to raise the temperature to about 85° C to about 150° C. Elevated temperatures above this range will cause degradation or chemical breakdown of the ink. The molten ink is then applied in raster fashion from the ink jets in the printhead 11 to the exposed surface of the liquid layer forming the intermediate transfer surface 12, where it is cooled to an intermediate temperature and solidifies to a malleable state in which it is transferred to the final receiving surface 28 via a contact transfer by entering the nip between the roller 22 and the liquid layer forming the intermediate transfer surface 12 on the support surface or drum 14. This intermediate temperature where the ink is maintained in its malleable state is between about 30° C to about 80° C.

Once the solid malleable ink image enters the nip, it is deformed to its final image conformation and adheres or is fixed to the final receiving substrate either by the pressure exerted against ink image 26 on the final receiving substrate 28 by the roller 22 alone, or by the combination of the pressure and heat supplied by heater 21 and/or heater 19. Heater 24 could optionally be employed to supply heat to facilitate the process at this point. The pressure exerted on the ink image 26 is between about 10 to about 2000 pounds per square inch (psi), more preferably between about 500 to about 1000 psi, and most preferably between about 750 to about 850 psi. The pressure must be sufficient to have the ink image 26 adhere to the final receiving substrate 28 and be sufficiently deformed to ensure that light is transmitted through the ink image rectilinearly or without significant deviation in its path from the inlet to the outlet, in those instances when the final receiving substrate is a transparency. Once adhered to the final receiving substrate 28, the ink image is cooled to ambient temperature of about 20-25 degrees Centigrade. The ink comprising the ink image must be ductile, or be able to yield or experience plastic deformation without fracture when kept at a temperature above the glass transition temperature. Below the glass transition temperature the ink is brittle. The temperature of the ink image in the ductile state is between about -10° C and to about the melting point or less than about 85° C.

FIG 3 diagrammatically illustrates the sequence involved when an ink image 26 is transferred from the liquid layer forming the intermediate transfer surface 12 to the final receiving substrate 28. As seen in FIG 3, the ink image 26 transfers to the final receiving substrate 28 with a small, but measurable quantity of the liquid in the intermediate transfer surface 12 attached thereto as an outer layer 29 . The average thickness of the transferred liquid layer 29 is calculated to be about 0.8 nanometers. Alternatively, the quantity of transferred liquid layer 29 can be expressed in terms of mass as being from about 0.1 to about 200 milligrams, and more preferably from about 0.5 to about 50 milligrams, and most preferably from about 1 to about 10 milligrams per page of final receiving substrate 28. This is determined by tracking on a test fixture the weight loss of the liquid in the applicator assembly 16 at the start of the imaging process and after a desired number of sheets of final receiving substrate 28 have been imaged.

Some appropriately small and finite quantity of the liquid in the liquid layer forming the intermediate transfer surface 12 also is transferred to the final receiving substrate in areas adjacent the transferred ink image 26. This relatively small transfer of the liquid from the intermediate transfer surface 12 with the ink image 26 and to the non-imaged areas on the final receiving substrate 28 can permit as many as ten pages or more of the final receiving substrate 28 to be imaged before it is necessary to replenish the sacrificial liquid layer forming the intermediate transfer surface 12. Replenishment may be necessary after fewer final imaged copies, depending on the quality and nature of the final receiving surface 28 that is utilized. Transparencies and paper are the primary intended media for image receipt. Commonly called "plain paper" is the preferred medium, such as that supplied by Xerox Corporation and many other companies for use in photocopy machines and laser printers. Many other commonly available office papers are included in this category of plain papers, including typewriter grade paper, standard bond papers, and letterhead paper. Xerox 4024 paper is assumed to be a representative grade of plain paper for the purposes of this invention.

While the thickness of the liquid layer forming the intermediate transfer surface 12 on the supporting surface or drum 14 can be measured, such as by the use of reflectance Fourier Transform infrared spectroscopy or a laser interferometer, it is theorized that the thickness can vary from about 0.05 microns to about 60 microns, more preferably from about .1 to about 50, and most preferably from about 1 to about 10 microns. The thickness of the layer forming the intermediate transfer surface 12 can increase if rougher surfaced supporting surfaces or drums 14 are employed. The surface topography of the supporting surface or drum 14 can have a roughness average ($R_a$) of from about 254 Angstroms to about 25,400 Angstroms (about 1 microinch to about 100 microinches), and a more preferred range of from about 5 to about 15 microinches. The image quality will degrade when a liquid layer thicker than about 60 microns is used to form the intermediate transfer surface 12.

Suitable liquids that may be employed as the intermediate transfer surface 12 include water, fluorinated oils, glycol, surfactants, mineral oil, silicone oil, functional oils or combinations thereof. Functional oils can include, but are not limited to, mercapto-silicone oils, fluorinated silicone oils and the like.

The liquid layer 12 that forms the intermediate transfer surface on the surface of drum 14 is heated by an appropriate heater device 19. Heater device 19 may be a radiant resistance heater positioned as shown or, more preferably, positioned internally within the drum 14. Heater devices 21 and 24 can also be employed in the paper or final receiving substrate guide apparatus 20 and in the fusing and fixing roller 22, respectively. Heater device 19 increases the temperature of the liquid intermediate transfer surface from ambient temperature to between about 25° C to about 70° C or higher. This temperature is dependent upon the exact nature of the liquid employed in liquid layer or intermediate transfer surface 12 and the ink employed. A more preferred range is between about 30° C to about 60° C, and a most preferred range is from about 45° C to about 52° C.

Heater 21 preheats the final receiving medium prior to the fixation of the ink image by being set to heat between about 70° C to about 200° C, more preferably to between about 85° C and about 140° C, and most preferably to between about 110° C to about 130° C. It is theorized that heater 21 raises the temperature of the final receiving medium to between about 90° C and about 100° C. However, the thermal energy of the receiving media is kept sufficiently low so as not to melt the ink upon transfer to the final receiving substrate 28. Heater 24, when employed, heats the transfer and fixing roller 22 to a temperature of between about 25° C and about 200° C and alternatively may also be employed internally within roller 22.

The ink used to form the ink image 26 preferably must have suitable specific properties for viscosity. Initially, the viscosity of the molten ink must be matched to the requirements of the ink jet device utilized to apply it to the intermediate transfer surface 12 and optimized relative to other physical and rheological properties of the ink as a solid, such as yield strength, hardness, elastic modulus, loss modulus, ratio of the loss modulus to the elastic modulus, and ductility. The viscosity of the phase change ink carrier composition has been measured on a Ferranti-Shirley Cone Plate Viscometer with a large cone. At about 140° C a preferred viscosity of the phase change ink carrier composition is from about 5 to about 30 centipoise, more preferably from about 10 to about 20 centipoise, and most preferably from about 11 to about 15 centipoise. The surface tension of suitable inks is between about 23 and about 50 dynes/centimeter. An appropriate ink composition is that described in U. S. Patent No. 4,889,560 issued December 26, 1989 and assigned to the assignee of the present invention.

Such an ink has a composition comprising a fatty amide-containing material employed as a phase change ink carrier composition and a compatible colorant. The fatty amide-containing material comprises a tetraamide compound and a monoamide compound. The phase change ink carrier composition is in a solid phase at ambient temperature and in a liquid phase at elevated operating temperature. The phase change ink carrier composition can comprise from about 10 to about 50 weight percent of a tetraamine compound, from about 30 to about 80 weight percent of a secondary mono-amide compound, from about 0 to about 40 weight percent of a tackifier, from about 0 to about 25 weight percent of a plasticizer, and from about 0 to about 10 weight percent of a viscosity modifying agent.

The subject phase change ink used in the instant invention is formed from a phase change ink carrier composition which exhibits excellent physical properties. For example, the subject phase change ink, unlike prior art phase change inks, exhibits a high level of lightness, chroma, and transparency when utilized in a thin film of substantially uniform thickness. This is especially valuable when color images are conveyed using overhead projection techniques. Furthermore, the preferred phase change ink compositions exhibit the preferred mechanical and fluidic properties mentioned above when measured by dynamic mechanical analyses (DMA), compressive yield testing and viscometry. More importantly, these work well when used in the printing process of the instant invention utilizing a liquid layer as the intermediate transfer surface. The phase change ink composition and its physical properties are discussed in greater detail in United States Patent Application No 07/981,677 filed November 25, 1992 (European Patent Application No 93309424.5).

The transmission spectra for each of the phase change inks used in the process of this invention were evaluated on a commercially available spectrophotometer, the ACS Spectro-Sensor II, in accordance with the measuring methods stipulated in ASTM IE805 (Standard Practice of Instrumental Methods of Color or Color Difference Measurements of Materials) using the appropriate calibration standards supplied by the instrument manufacturer. For purposes of verifying and quantifying the overall colorimetric performance of the inks used in the process and as a part of this invention, measurement data were reduced, via tristimulus integration, following ASTM E308 (Standard Method for Computing the Colors of Objects using the CIE System) in order to calculate the 1976 CIE $L^*$ (Lightness), $a^*$ (redness-greenness), and $b^*$ (yellowness-blueness), (CIELAB) values for each phase change ink sample. In addition, the values for $Q_{hab}$ELAB Psychometric Chroma, $C^*_{ab}$, and CIELAB Psychometric Hue Angle, were calculated according to publication CIE15.2, Colorimetry (Second Edition, Central Bureau de la CIE, Vienna, 1986).

Unlike conventional phase change ink carriers, the nature of the phase change ink carrier composition of the inks used in the process of the present invention is such that thin films of substantially uniform thickness exhibit a relatively high $L^*$ value. For example, a substantially uniform thin film of about 20 micron thickness of the phase change ink carrier composition of this invention preferably has an $L^*$ value of at least about 65, more preferably at least about 75, and most preferably at least about 85.

The phase change inks used herein have a relatively high $C^*ab$ value when measured as a thin film of substantially uniform thickness. Previously, conventional phase change inks have had a very low degree of rectilinear light transmissivity, even in thin films of substantially uniform thickness. The phase change ink composition used in the process of this invention has $C^*ab$ values, when applied as a substantially uniform thin film of about 10 micron thickness with subtractive primary yellow, magenta and cyan color phase change ink compositions, that preferably are at least about 40 for said yellow ink composition, at least about 65 for said magenta ink composition, and at least about 30 for the cyan ink composition.

It is also important that the black color phase change ink component be at a minimum light transmissivity level so that the color intensity of the ink is maximized. Accordingly, the L* value of a substantially uniform thin film of about 10 microns thickness of a black color phase change ink is preferably not more than about 35, more preferably not more than about 30, and most preferably not more than about 25.

The respective phase change ink and ink carrier compositions, when transferred to the final substrate in a thin film, are quite durable. One indication of durability is abrasion resistance. For purposes of this invention, abrasion resistance is determined by testing a finished print sample of the phase change ink produced from the carrier composition in a Teledyne Taber Abrader, Model 5130, utilizing CS-230 Abrasion wheels loaded with 500 gram weights. The abrasion wheels are resurfaced after each sample with an S-11 resurfacing disk. Samples printed on paper were tested according to ASTM D406(F84 (Standard Test Method For Abrasion Resistance of Organic Coatings by the Taber Abrader). Samples printed on light transmissive thin films were tested using ASTM D1304Q-85 (Standard Test Method For Resistance of Transparent Plastics to Surface Abrasion). Print samples were tested as described above, and the results of those tests demonstrated excellent abrasion resistance.

A further test employed to evaluate the durability of phase change inks and ink carrier compositions is an offset transfer or blocking test. This determines whether the phase change ink printed on a substrate will adhere to an adjacent substrate at ambient or elevated temperatures when the printed products are stacked one on top of the other. The blocking test is conducted using an indirect transfer method by printing samples of the phase change ink produced from the carrier composition onto a paper or thin film substrate and placing that substrate in a manila folder under a one pound piece of aluminum, about 8.5 inches wide and about 11 inches long to evenly distribute the weight of a 10 pound block. These printed samples are placed in an oven for 24 hours at a constant temperature of about 60° C. Print samples of the phase change ink of the present invention, subjected to the above described blocking test showed no blocking.

The above-defined DMA properties of the phase change ink compositions were experimentally determined. These dynamic measurements were done on the Rheometrics Solids Analyzer (RSA II) manufactured by Rheometrics, Inc. of Piscataway, New Jersey, using a dual cantilever beam geometry. The dimensions of the sample were about $2.0 \pm 1.0$ mm thick, about $6.5 \pm = 0.5$ mm wide, about $54.0 \pm 1.0$ mm long. A time/cure sweep was carried out under a desired force oscillation or testing frequency of about 1 Hz and an auto-strain range of about $1.0 \times 10^{-5}\%$ to about 1%. The temperature range examined was about -60° to about 90° C. The preferred phase change ink compositions typically are (a) flexible at a temperature of about -10 to about 80° C, (b) have a temperature range for the glassy region from about -100 to 40° C, the value of E' being from about $1.5 \times 10^9$ to $1.5 \times 10^{11}$ dyne/cm$^2$, (c) have a temperature range for the transition region from about -30 to about 60° C, (d) have a temperature range for the rubbery region of E' from about -10 to 100° C, the value of E' being from about $1.0 \times 10^6$ to $1.0 \times 10^{11}$ dyne/cm$^2$, and (e) have a temperature range for the terminal region of E' from about 30 to about 160° C. Furthermore, the glass transition temperature range of the phase change ink compositions are from about -40 to about 40° C, the temperature range for integrating under the tan $\delta$ peak of the phase change ink composition is from about -80 to about 80° C with integration values ranging from about 5 to about 40, and the temperature range for the peak value of tan 6 of the phase change ink is from about -40 to about 40° C with a tan $\delta$ of about $1.0 \times 10^{-2}$ to about $1.0 \times 10$ at peak.

A representative plot of the storage modulus, E', as a function of temperature at 1 Hz for an appropriate phase change ink composition for use in the printing process of the present invention can be produced. The curve will be divided up into four distinct regions: glassy, transition, rubbery, and terminal.

In the glassy region the ink behaves similar to a hard, brittle solid i.e., E' is high, about $1 \times 10^{10}$ dyne/cm$^2$. This is because in this region there is not enough thermal energy or long enough time for the molecules to move. This region needs to be well-below room temperature so the ink will not be brittle and affect the room temperature performance on paper.

The transition region is characterized by a large drop in the storage modulus of about one order of magnitude. This is because the molecules have enough thermal energy or time to undergo conformational changes. In this region, the ink changes from being hard and brittle to being tough and leathery.

The rubbery region describes a slightly decreasing plateau. In this region, there is a short term elastic response to the deformation that gives the ink its flexibility. It is theorized that the impedance to motion or flow in this region is due to entanglements of molecules or physical cross-links from crystalline domains. Fine tuning of the ink to get this plateau in the appropriate temperature range for good transfer and fixing and room temperature performance is of great importance in formulating these phase change ink compositions. The rubbery region encompasses the ink in both its malleable state during the transfer and fixing or fusing step and its final ductile state on the final receiving substrate.

Finally, in the terminal region, there is another drop in the modulus. It is believed in this region that the molecules have sufficient energy or time to flow and overcome the entanglements.

The general temperature profile of tan δ for a phase change ink composition for use in the printing process of the present invention can be described as follows. In the glassy region, tan δ is small. The peak of the damping curve occurs in the transition region and indicates the $T_g$ of the material. The area under the tan δ curve gives an indication of the relative toughness of the ink, which is a measure of the energy dissipated during deformation. Since tan δ is equal to the loss modulus divided by the storage modulus, it is not necessary to specify the profiles of both the tan δ and loss modulus.

The phase change ink compositions were also analyzed by compressive yield testing. The compressive yield strength measurements were done on an MTS SINTECH 2/D mechanical tester manufactured by MTS Sintech, Inc. of Cary, North Carolina, using small cylindrical sample blocks. The dimensions of a typical sample are about 19.0 ± 1.0 mm X about 19.0 ± 1.0 mm. Isothermal yield stress was measured as a function of temperature (about 25° to about 80° C) and strain rate. The material was deformed up to about 40%.

The preferred yield stresses as a function of temperature for suitable phase change ink compositions for use in the indirect printing process of the present invention are described by an equation as follows:

$$YS = mT + I$$

wherein YS, which is a function of temperature, is the yield stress, m is the slope, T is the temperature, and I is the intercept.

Under non-process conditions, i.e., after the final printed product is formed or conditions under which the ink sticks are stored, and the ink is in a ductile state or condition at a temperature range of from at least about 10° to about 60° C, the preferred yield stress values are described by m as being from about -9 ± -2 psi/° C to about -36 ± -2 psi/° C and I as being from about 800 ± 100 psi to about 2200 ± 100 psi. More preferably, m is about -30 ± -2 psi/° C and I is about 1700 ± 100 psi. Under process conditions, i.e., during the indirect printing of the ink from an intermediate transfer surface onto a substrate while the ink is in a malleable solid condition or state, at a temperature of from at least about 30° C to about 80° C, the preferred stress values are described by m as being from about -6 ± -2 psi/° C to about -36 ± -2 psi/° C and I as being from about 800 ± 100 psi to about 1600 ± 100 psi. More preferably, m is about -9 ± -2 psi/° C and I is about 950 ± 100 psi.

In operation the support surface or drum 14 has a layer of liquid intermediate transfer surface applied to its surface by the action of the applicator assembly 16. Assembly 16 is raised by an appropriate mechanism (not shown), such as an air cylinder, until the web 15 is in contact with the surface of the drum 14. The liquid is retained within a reservoir (not shown) within the assembly 16 and passes through the porous supporting material 18 until it saturates the web 15 to permit a uniform layer of desired thickness of the liquid to be deposited on the surface of the drum 14. The drum 14 rotates about a journalled shaft in the direction shown in FIG 1 while the heater 19 heats the liquid layer and the surface of the drum 14 to the desired temperature. Once the entire periphery of the drum 14 has been coated, the applicator apparatus is lowered to a non-contact position with the liquid layer forming the intermediate transfer surface 12 on the exterior of the drum 14.

Phase change Ink is applied to the exposed surface of the liquid intermediate transfer surface 12 by the printhead 11. The ink is applied in molten form, having been melted from its solid state form by appropriate heating means (not shown). The ink image 26 solidifies on the surface of the liquid by cooling to a malleable solid intermediate state as the drum continues to rotate, entering the nip formed by the roller 22 and the curved surface of the intermediate transfer surface 12 supported by the drum 14. The ink image 26 is deformed to its final image conformation and adhered to the final receiving surface 28 by being pressed there against. The ink image 26 is thus transferred and fixed to the final receiving surface 28 by the pressure exerted on it in the nip by the resilient or elastomeric surface of the roller 22. Stripper fingers 25 help to remove the imaged final receiving surface 28 from the liquid intermediate transfer surface 12 as the drum rotates. The ink image 26 then cools to ambient temperature where it possesses sufficient strength and ductility to ensure its durability.

After a predetermined number of imagings, such as 10 or fewer as needed, the applicator assembly 16 is actuated to raise upward into contact with the sacrificial intermediate transfer surface 12 to replenish the liquid forming the surface 12.

The following examples are presented to illustrate the scope of the invention and to be illustrative of the type of materials that can be successfully employed as the liquid intermediate transfer surface 12, without any intent to limit the invention to the specific materials, process or structure employed.

EXAMPLE I

A test fixture having a rotatably mounted about 0.004 inch thick drafting Mylar® plastic-covered aluminum drum with the matte side of the plastic facing out and a diameter of about 4.13 inches was positioned adjacent and in close proximity to a transfer and fusing roller of smaller diameter. A piezoelectrically driven printhead with phase change ink was positioned intermediate the drum and the transfer and fusing roller to deliver the primary colors of cyan, magenta, yellow and black to the exposed surface of a thin liquid layer of an intermediate transfer surface in raster fashion. The drum surface was hand coated with a liquid layer consisting of a mixture of about 79.5% by weight deionized water, about 20% by weight polyethylene glycol available as PEG 200 from Aldrich Chemical Company, and about 0.5% by weight of a fluorinated surfactant leveling agent commonly used in epoxies and available from the 3M Company under the tradename Fluorad FC-430 coating additive. This mixture was applied manually with a hand wipe available from Kimberly-Clark under the KAYDRY tradename to form the liquid intermediate transfer surface. The liquid layer was not entirely evenly applied to the drum surface since more thickly coated areas were noticeably visible. The drum temperature was maintained at about 29° C to about 30° C. Paper was used as the final receiving substrate and was preheated by an external heating device with a temperature of about 100° C prior to being brought into contact with the transferred ink image. The transfer and fusing roller was also heated by an external heating device having a setpoint of about 120° C.

During imaging the drum was rotated at a surface speed of about 33.3 inches per second. During transfer and fixing, the surface speed of the roller was about 5 inches per second. A full color test image was imaged by the printhead on the liquid intermediate transfer layer and transferred to Xerox 4024 plain copy paper. The transferred image was of good quality with only a few pixels left untransferred to the paper.

EXAMPLE II

The same test fixture and conditions as described above were employed, except that the liquid used to form the liquid intermediate transfer layer was an alkylphenyl polyglycol nonionic surfactant sold under the tradename Triton® X-100 by Spectrum Chemical Manufacturing Corporation of Gardenia, CA. Multiple copies of the same test image as in Example I were made, producing prints with somewhat tacky imaged areas. When the print sheets were stacked one on top of another, some parts of the color image were transferred to the back of the overlying sheet of paper. It appeared as though the liquid used as the intermediate transfer layer penetrated the ink, partially plasticizing it. However, the inked image was successfully transferred from the liquid intermediate transfer surface to the paper.

EXAMPLE III

The same test fixture and conditions as were utilized in Example I were employed, except that the fluorinated surfactant leveling agent sold under the tradename Fluorad FC-430 by 3M Corporation was employed as the liquid intermediate transfer surface. Two prints were made of the same full color test image as in Example I, with incomplete areas of transfer and a slightly tacky feeling in the printed areas.

EXAMPLE IV

The same test fixture and conditions as were utilized in Example I were employed, except that the liquid was applied in a wicking fashion with a wick/felt laminate applicator having a steel backing plate. The applicator had a force measured in air pressure of about 19.5 pounds per square inch or about 15 pounds of force pressing it against the surface of the drum while applying the liquid layer. About 80 cubic centimeters of the liquid was placed into the applicator's reservoir. Five prints were made at the initial transfer and fixing speed of about 5 inches per second. The speed was increased by about 1 inch per second up to about 11 inches per second until a total of 51 full color test prints of the type in Example I were made, including 2 transparencies made at a fixing speed of about 11 inches per second. Successful transfers were made at each transfer speed, but abrasion testing disclosed a gradual decrease in adherence of the images to the paper at the higher transfer speeds. Acceptable quality color prints were made up to transfer speeds of about 7 inches per second.

EXAMPLE V

The same test fixture and conditions as were utilized in Example I were employed, except that the liquid was deionized water and was applied with a wick/felt laminate applicator in wicking fashion to a depth of about 1 mil. The applicator employed a steel backing plate. The liquid was intended to be delivered in a wicking fashion. The applicator delivered the liquid with about 18 pounds of force, forcing it against the surface of the drum while applying the liquid layer. About 80 cubic centimeters of the liquid was placed into the applicator's reservoir. Several prints were made of a four color bar pattern at an initial transfer and fixing speed of about 5 inches per second. The imaging surface speed was about 23.3 inches per second with an application time at the imaging speed of about 800 microseconds. The ink drop ejection rate was set at about 7 Khz. The heater for the final receiving substrate, which in this case was paper, was set at about 100° C. The transfer and fixing roller's heater had a set point of about 120° C. The surface of the drum supporting the liquid layer was heated to between about 30° C to about 31° C, which caused some accelerated evaporation of the deionized water forming the liquid layer and required a relatively fast transfer speed. Successful four color transfers were made with each attempt, although it appeared that too thick of a layer of the deionized water would result in displaced dots.

EXAMPLE VI

A test fixture similar to that employed in Example I was used, except that the support drum was aluminum with an anodized surface finish. The drum had a diameter of about 3.979 inches and was externally heated across an air gap with a resistance heater that was linked to a control with an established setpoint of about 47° C.

The heated drum surface was coated with silicone oil sold under the tradename Dow Corning 200. The oil was applied by being contacted for less than about 0.6 seconds during two rotations of the drum at an application speed of about 40 inches per second with an oil impregnated polyester web contained within a raisable cassette assembly. The web was pressed into contact with the drum surface with a force of about 10 pounds. Once the drum surface was fully coated with the liquid layer that forms the intermediate transfer surface, the cassette assembly was lowered out of contact with the drum.

The paper final receiving substrate was preheated by a flat and flexible vulcanized silicone heater attached to the paper feed guides and having a temperature setpoint of about 120° C. The transfer and fusing roller had a diameter of about 1.5 inches and a length of about 9 inches. The roller was not heated, but was stabilized at a temperature of about 45° C. The roller applied a nip pressure of about 750 to about 850 pounds per square inch. The roller was coated with about a 0.09 inch thick Shore D 40 elastomer.

A full test image was created on the liquid layer of silicone oil forming the intermediate transfer surface under the same conditions as were utilized for imaging in Example I and was transferred to Xerox 4024 plain copy paper. The transferred image was of excellent quality with no untransferred pixels left behind on the liquid layer.

While the invention has been described above with reference to specific embodiments thereof, it is apparent that many changes, modifications and variations in the materials, arrangements of parts and steps can be made. It should be noted that the liquid layer also could be applied to the supporting surface from an internal, in the instance of a drum, or underlying resupply source or reservoir so that it passes to the surface by seeping or penetrating through the porous surface. The porous surface could be sponge-like, such as an appropriate sintered metal. The liquid could also pass to the surface by diffusion, such as its first being absorbed into microscopic pores within the surface of the support surface and then diffusing out.

## Claims

1. A method of imaging which method comprises:-

    (a) applying a liquid layer (12) to a supporting surface (14), the liquid layer (12) serving as an intermediate transfer surface and having an exposed surface not in contact with the supporting surface (14) and an opposing second surface in contact with the supporting surface (14);
    (b) imaging the exposed surface of the liquid layer (12) to form an image formed of phase change ink composition (26) thereon; and
    (c) transferring the image (26) to a receiving medium (28).

2. A method as claimed in Claim 1 wherein steps (b) and (c) are repeated a predetermined number of times.

3. A method as claimed in Claim 1 wherein liquid is applied to the supporting surface (14) so as to form a liquid layer (12) which has a thickness of from about 0.05 to about 60 microns.

4. A method as claimed in Claim 3 wherein the thickness of the liquid layer (12) is from 0.1 to 50 microns.

5. A method as claimed in Claim 4 wherein the thickness of the liquid layer (12) is from 1 to 10 microns.

6. A method as claimed in any preceding claim wherein liquid is applied from a source to the liquid layer (12) on the supporting surface (14) to renew the liquid layer (12).

7. A method as claimed in any preceding claim wherein the liquid of the liquid layer (12) is water, a fluorinated oil, glycol, a mineral oil, a silicone oil, a surfactant, a functional oil or a combination of two or more thereof.

8. A method as claimed in any previous claim wherein the image (26) is formed by changing the phase change ink composition from a solid state to a molten state, applying said phase change ink composition to the liquid layer (12) in liquid ink form and solidifying, or allowing to solidify, the applied ink into a solid image (26) on the liquid layer (12).

9. A method as claimed in any preceding claim wherein the ink is applied to the liquid layer (12) from an ink jet print head (11).

10. A method as claimed in any one previous claim wherein the ink is one comprising a fatty amide-containing material and a compatible colorant.

11. A method as claimed in Claim 12 wherein the fatty amide-containing material is a phase change ink carrier composition comprising a tetraamide compound and a monoamide compound such that the phase change ink carrier composition is in a solid phase at ambient temperature and in a liquid phase at elevated operating temperature.

12. A method as claimed in Claim 11 wherein the phase change ink carrier composition is one comprising from about 10 to 50 about weight percent of a tetraamide compound, from about 30 to about 80 weight percent of a secondary monoamide compound, from about 0 to about 40 weight percent of a tackifier, from about 0 to about 25 weight percent of a plasticizer, and from about 0 to about 10 weight percent of a viscosity modifying agent.

13. A method as claimed in any preceding claim wherein the phase change ink is applied to the liquid layer (12) in liquid ink form, the applied liquid ink being cooled to malleable solid condition while on the liquid layer (12) thus forming a deformable deposit (26).

14. A method as claimed in Claim 13 wherein the ink of said deformable deposit (26) is deformed by pressure while in the malleable solid condition during the transfer to the receiving medium (28).

15. A method as claimed in Claim 13 or Claim 14 wherein the ink of the deformable deposit (26) has a temperature of from about 30°C to about 80°C during transfer thereof as an image (26) to said receiving medium (28).

16. A method as claimed in any one of Claims 13 to 15 wherein the ink used in the imaging step is cooled on the receiving medium (28) to a condition in which it is fracture-resistant and ductile at ambient temperature.

17. A method as claimed in Claim 16 wherein the ink is cooled on the receiving medium (28) to achieve said condition of fracture-resistance and ductility and said ink is one which has such condition over a temperature range from about -10°C to just below ink melting point.

18. A method as claimed in any one of Claims 13 to 17 wherein the ink in the deformable deposit (26) has during transfer thereof as an image (26) to the receiving medium (28) a yield stress value (YS), according to the equation $YS = mT + I$ wherein m is from about $-6 \pm -2$ to about $-19 \pm -2$ psi/°C, T is from about 30 to about 80°C and I is from about $800 \pm 100$ psi to about $1600 \pm 100$ psi.

19. A method as claimed in any one of Claims 13 to 18 wherein the ink used in the imaging step is cooled on the receiving medium (28) to a condition in which it is fracture-resistant and ductile and has a yield stress value (YS) according to the equation $YS = mT + I$, wherein m is from about $-9 \pm -2$ to about $-36 \pm -2$ psi/°C; T is from about 10 to about 60°C; and I is from about $800 \pm 100$ psi to about $2200 \pm 100$ psi.

20. An apparatus for use in imaging and comprising:-

    (a) a supporting surface (14);
    (b) means (16) for applying a liquid layer (12) to the supporting surface (14) to thereby create an intermediate transfer surface thereon having a first surface in contact with the supporting surface (14) and an exposed second surface not in contact with the supporting surface (14);
    (c) means (11) for imaging the exposed surface of the liquid layer (12) to form an image (26) formed of phase change ink composition thereon; and
    (d) means (22,23) for transferring the image (26) to a receiving medium (28).

21. An apparatus as claimed in Claim 20 wherein the supporting surface (14) is a rotatable drum (14).

22. An apparatus as claimed in Claim 21 wherein the drum (14) is mounted to the imaging means (11).

23. An apparatus as claimed in any one of Claims 20 to 22 wherein the means (16) for applying a liquid layer (12) to the supporting surface (14) includes a web (18) that is displaceable into and out of contact with the supporting surface (14).

24. An apparatus as claimed in any one of Claims 20 to 23 wherein the imaging means (11) comprises an ink jet print head (11) arranged selectively to eject ink.

25. An apparatus as claimed in Claim 24 wherein the imaging means (11) comprises a heating means operable to melt a solid ink from the solid state to a molten state prior to ejection from the ink jet print head (11).

26. An apparatus as claimed in Claim 25 and comprising an apparatus to permit the ink applied to the exposed surface of the liquid layer (12) to cool and solidify to a malleable condition.

27. An apparatus as claimed in Claim 25 or Claim 26 and comprising apparatus to cool the transferred and deformed ink image (26) to a ductile and fracture-resistant condition at ambient air temperature.

28. An apparatus as claimed in any one of Claims 20 to 27 wherein the transferring means (22,23) comprises a roller (22) operable to pressure fuse the ink image (26) to the receiving medium (28) by deforming the ink image (26) and adhering the ink image (26) to said receiving medium (28).

**29.** A method of imaging which method comprises:-

(a) imaging a liquid transfer surface (12) with a phase change ink deposit (26) by applying heat to change the phase change ink from a solid state to a liquid state and applying said liquid phase change ink to said surface (12);

(b) cooling the so-applied phase change ink from the liquid state to a malleable solid condition;

(c) transferring the re-solidified phase change ink deposit (26) in the malleable condition to a receiving medium (28); and

(d) cooling the phase change ink deposit (26) on the receiving medium (28) to a ductile condition in the solid state so that the phase change ink will yield without fracturing.

**30.** A method as claimed in Claim 29 wherein the phase change ink deposit (26) is deformed during transfer from the imaged transfer surface (12) to the receiving medium (28) and optionally fused thereto.

**31.** A method as claimed in Claim 29 wherein the phase change ink deposit (26) is deformed prior to transfer from the imaged transfer surface (12) to the receiving medium (28).

**32.** A method as claimed in Claim 30 or Claim 31 wherein the deformation changes the phase change ink deposit (26) to a final image conformation.

**33.** A method as claimed in any one of Claims 29 to 32 wherein the phase change ink applied in the imaging step to the transfer surface has a temperature of from about 30°C to about 80°C when in the cooled malleable solid condition.

**34.** A method as claimed in any one of Claims 29 to 33 wherein the phase change ink on the receiving medium (28) has a temperature of from about 10°C to about 60°C when in the ductile condition.

**35.** A method as claimed in any one of Claims 29 to 34 wherein the ink when cooled on the imaged transfer surface (14) to malleable condition has a yield stress of between about 460 to about 1190 psi and of between about 60 to about 340 psi calculated according to the equation YS = mT + I, wherein m is from about -6 ± -2 psi/°C to about -19 ± -2 psi/°C; T is from about 30 to about 80°C; and I is from about 800 ± 100 psi to about 1600 ± 100 psi.

**36.** A method as claimed in any one of Claims 29 to 35 wherein the ink when cooled to a ductile condition on the receiving surface (28) has a yield stress between about 10°C and about 60°C of between about 590 to about 1960 psi and of between about 40 to about 260 psi calculated according to the equation YS = mT + I, wherein m is from about -9 ± -2 to about -36 ± -2 psi/°C, T is from about 10 to about 60°C, and I is from about 800 ± 100 psi to about 2200 ± 100 psi.

**37.** Use of a liquid material as a coating layer on a print-receiving surface arranged to receive print deposits formed of phase change ink composition at print addresses thereof, said surface acting as a transfer surface for interfacingly contacting said deposits with a print substrate intended as a permanent printed carrier of printed information.

**38.** An ink jet printer wherein an ink jet print head addresses a transfer surface and the transfer surface addresses a print substrate and wherein the transfer surface is addressed also by transfer surface liquid coating means whereby said surface can be coated with a liquid layer for carrying on said surface ink jet print deposits formed of phase change ink composition addressed to said surface by said head.

**Patentansprüche**

**1.** Verfahren zur Bilderzeugung mit den folgenden Schritten:

(a) Aufbringen einer Flüssigkeitsschicht (12) auf eine Trägeroberfläche (14), wobei die Flüssigkeitsschicht (12) als intermediäre Übertragungsoberfläche dient und eine offene Oberfläche aufweist, die keinen Kontakt mit der Trägeroberfläche (14) hat, sowie eine gegenüberliegende zweite Oberfläche, die mit der Trägeroberfläche (14) in Kontakt steht;

(b) Bearbeitung der offenen Oberfläche der Flüssigkeitsschicht (12) zur Erzeugung eines aus einer Phasenwechseltinten-Zusammensetzung gebildeten Bildes (26); und

(c) Übertragen des Bildes (26) auf ein Aufnahmemedium (28).

**2.** Verfahren nach Anspruch 1, bei dem die Schritte (b) und (c) eine bestimmte Anzahl von Malen wiederholt werden.

**3.** Verfahren nach Anspruch 1, bei dem Flüssigkeit auf die Trägeroberfläche (14) aufgetragen wird, um eine Flüssigkeitsschicht (12) zu bilden, die eine Dicke von ca. 0,05 bis ca. 60 μm hat.

4. Verfahren nach Anspruch 3, bei dem die Dicke der Flüssigkeitsschicht ca. 0,1 bis 50 μm beträgt.

5. Verfahren nach Anspruch 4, bei dem die Dicke der Flüssigkeitsschicht ca. 0,1 bis 10 μm beträgt.

6. Verfahren nach einem der vorhergehenden Ansprüche, bei dem die Flüssigkeit aus einer Quelle auf die auf der Trägeroberfläche (14) befindliche Flüssigkeitsschicht (12) aufgetragen wird, um die Flüssigkeitsschicht (12) zu erneuern.

7. Verfahren nach einem der vorhergehenden Ansprüche, bei dem die Flüssigkeit der Flüssigkeitsschicht (12) Wasser, fluoriertes Öl, Glykol, Mineralöl, Silikonöl, eine oberflächenaktive Substanz, ein funktionelles Öl oder eine Kombination aus zwei oder mehreren dieser Komponenten ist.

8. Verfahren nach einem der vorhergehenden Ansprüche, bei dem das Bild (26) erzeugt wird, indem die Phasenwechseltinten-Zusammensetzung von einem festen Zustand in einen geschmolzenen Zustand überführt wird, die flüssige Phasenwechseltinten-Zusammensetzung auf die Flüssigkeitsschicht (12) aufgetragen wird und die aufgetragene Tinte zu einem festen Bild (26) auf der Flüssigoberfläche (12) erhärtet wird bzw. ihr erlaubt wird, auszuhärten.

9. Verfahren nach einem der vorhergehenden Ansprüche, bei dem die Tinte von einem Tintenstrahldruckkopf (11) auf die Flüssigkeitsschicht (12) aufgetragen wird.

10. Verfahren nach einem der vorhergehenden Ansprüche, bei dem die Tinte ein fettiges, Amid enthaltendes Material und ein kompatibles Färbemittel umfaßt.

11. Verfahren nach Anspruch 10, bei dem das fettige, Amid enthaltende Material eine Phasenwechseltinten-Träger-Zusammensetzung ist, die eine Tetraamid-Verbindung und eine Monoamid-Verbindung umfaßt, so daß die Phasenwechseltinten-Träger-Zusammensetzung bei Umgebungstemperatur fest und bei erhöhter Betriebstemperatur flüssig ist.

12. Verfahren nach Anspruch 11, bei dem die Phasenwechseltinten-Träger-Zusammensetzung ca. 10 bis ca. 50 Gew.-% einer Tetraamid-Verbindung enthält, ca. 30 bis ca. 80 Gew.-% einer sekundären Monoamid-Verbindung, ca. 0 bis ca. 40 Gew.-% eines Verdickers, ca. 0 bis ca. 25 Gew.-% eines Plastifizierers, und ca. 0 bis ca. 10 Gew.-% eines die Viskosität verändernden Mittels.

13. Verfahren nach einem der vorhergehenden Ansprüche, bei dem die Phasenwechseltinte in flüssiger Form auf die Flüssigkeitsschicht (12) aufgetragen wird, und die auf die Flüssigkeitsschicht (12) aufgetragene flüssige Tinte auf einen dehnbaren, festen Zustand abgekühlt wird, um so eine verformbare Ablagerung (26) zu bilden.

14. Verfahren nach Anspruch 13, bei dem die Tinte der verformbaren Ablagerung (26) in ihrem dehnbaren Zustand durch Druck verformt wird, während sie auf das Aufnahmemedium (28) übertragen wird.

15. Verfahren nach Anspruch 13 oder 14, bei dem die Tinte der verformbaren Ablagerung (26) während der Übertragung als Bild (26) auf das Aufnahmemedium (28) eine Temperatur von ca. 30 bis 80°C hat.

16. Verfahren nach einem der Ansprüche 13 bis 15, bei dem die in dem Bilderzeugungsschritt verwendete Tinte auf dem Aufnahmemedium (28) bis zu einem Zustand gekühlt wird, in dem sie bei Raumtemperatur bruchfest und nachgiebig ist.

17. Verfahren nach Anspruch 16, bei dem die Tinte auf dem Aufnahmemedium (28) abgekühlt wird, um den bruchfesten, nachgiebigen Zustand zu erreichen, und die Tinte so beschaffen ist, daß sie diesen Zustand über einen Temperaturbereich von ca. -10°C bis kurz unter Tintenschmelztemperatur hat.

18. Verfahren nach einem der Ansprüche 13 bis 17, bei dem die Tinte in der verformbaren Ablagerung (26) während deren Übertragung als Bild (26) auf das Aufnahmemedium (28) einen Streckpunkt (YS) gemäß der Gleichung $YS = mT + I$ hat, in der m ca. $-6 \pm -2$ bis ca. $-19 \pm -2$ psi/°C ist, T ca. 30 - 80°C beträgt und I von ca. $800 \pm 100$ psi bis ca. $1600 \pm 100$ psi variiert.

19. Verfahren nach einem der Ansprüche 13 bis 18, bei dem die im Bilderzeugungsschritt verwendete Tinte auf dem Aufnahmemedium (28) auf einen Zustand abgekühlt wird, in dem sie bruchfest und nachgiebig ist, und einen Streckpunkt (YS) gemäß der Gleichung $YS = mT + I$ hat, in der m ca. $-9 \pm -2$ bis ca. $-36 \pm -2$ psi/°C ist, T ca. 10 - 60°C beträgt und I von ca. $800 \pm 100$ psi bis ca. $2200 \pm 100$ psi variiert.

20. Vorrichtung zur Verwendung bei der Bilderzeugung, die folgendes umfaßt:

    (a) eine Trägeroberfläche (14);

    (b) ein Mittel (16) zum Auftragen einer Flüssigkeitsschicht (12) auf die Trägeroberfläche (14), um darauf so eine intermediäre Übertragungsoberfläche zu schaffen, deren erste Oberfläche mit der Trägeroberfläche (14) in Kontakt steht und deren offene zweite Oberfläche nicht mit der Trägeroberfläche (14) in Kontakt steht;

(c) Mittel (11) zur Bilderzeugung auf der offenen Oberfläche der Flüssigkeitsschicht (12), um ein aus einer Phasenwechseltinten-Zusammensetzung gebildetes Bild (26) zu bilden; und

(d) Mittel (22, 23) zum Übertragen des Bildes (26) auf ein Aufnahmemedium (28).

21. Vorrichtung nach Anspruch 20, bei der die Trägeroberfläche (14) eine drehbare Trommel (14) ist.

22. Vorrichtung nach Anspruch 21, bei der die Trommel (14) an dem Bilderzeugungsmittel (11) befestigt ist.

23. Vorrichtung nach einem der Ansprüche 20 bis 22, bei der das Mittel (16) zum Auftragen einer Flüssigkeitsschicht (12) auf die Trägeroberfläche (14) ein Gewebe (18) umfaßt, das so verschiebbar ist, daß es mit der Trägeroberfläche (14) in Kontakt steht oder nicht.

24. Vorrichtung nach einem der Ansprüche 20 bis 23, bei dem das Bilderzeugungsmittel (11) einen Tintenstrahldruckkopf (11) umfaßt, der wahlweise Tinte ausstoßen kann.

25. Vorrichtung nach Anspruch 24, bei der das Bilderzeugungsmittel (11) ein Heizmittel umfaßt, das eine feste Tinte vor deren Ausstoßen durch den Tintenstrahldruckkopf (11) von einem festen in einen geschmolzenen Zustand versetzen kann.

26. Vorrichtung nach Anspruch 25, die eine Einrichtung umfaßt, die ermöglicht, daß die auf die offene Oberfläche der Flüssigkeitsschicht (12) aufgebrachte Tinte abkühlt und zu einem dehnbaren Zustand aushärtet.

27. Vorrichtung nach Anspruch 25 oder 26, die eine Einrichtung zum Abkühlen des übertragenen und verformten Tintenbildes (26) auf einen bei Raumtemperatur nachgiebigen und bruchfesten Zustand umfaßt.

28. Vorrichtung nach einem der Ansprüche 20 bis 27, bei der das Übertragungsmittel (22, 23) eine Walze (22) umfaßt, die dazu dient, das Tintenbild (26) mit Druck auf das Aufnahmemedium (28) aufzuschmelzen, indem sie das Tintenbild (26) verformt und das Tintenbild (26) auf das Aufnahmemedium (28) aufklebt.

29. Verfahren zur Bilderzeugung mit den folgenden Schritten:

(a) Erzeugen eines Bildes auf einer flüssigen Übertragungsoberfläche (12) mit einer Phasenwechseltinten-Ablagerung (26) unter Verwendung von Wärme, um den Zustand der Phasenwechseltinte von fest in flüssig zu ändern, und Auftragen der flüssigen Phasenwechseltinte auf die Oberfläche (12);

(b) Abkühlen der so aufgetragenen Phasenwechseltinte vom flüssigen in einen dehnbaren, festen Zustand;

(c) Übertragen der wieder verfestigten, dehnbaren Phasenwechseltinten-Ablagerung (26) auf ein Aufnahmemedium (28); und

(d) Abkühlen der Phasenwechseltinten-Ablagerung (26) auf dem Aufnahmemedium (28) bis in einen nachgiebigen, festen Zustand, in dem die Phasenwechseltinte nachgibt, ohne zu brechen.

30. Verfahren nach Anspruch 29, bei dem die Phasenwechseltinten-Ablagerung (26) während der Übertragung der mit einem Bild versehenen Übertragungsoberfläche (12) auf das Aufnahmemedium (28) verformt wird und wahlweise darauf aufgeschmolzen wird.

31. Verfahren nach Anspruch 29, bei dem die Phasenwechseltinten-Ablagerung (26) vor der Übertragung der mit einem Bild versehenen Übertragungsoberfläche (12) auf das Aufnahmemedium (28) verformt wird.

32. Verfahren nach Anspruch 30 oder 31, bei dem die Verformung die Phasenwechseltinten-Ablagerung (26) zu einem endgültigen Bild verändert.

33. Verfahren nach einem der Ansprüche 29 bis 32, bei dem die in dem Bilderzeugungsschritt auf die Übertragungsoberfläche aufgetragene Phasenwechseltinte eine Temperatur von ca. 30 bis ca. 80°C aufweist, wenn sie sich im abgekühlten, dehnbaren, festen Zustand befindet.

34. Verfahren nach einem der Ansprüche 29 bis 33, bei dem die Phasenwechseltinte auf dem Aufnahmemedium (28) eine Temperatur von ca. 10 bis ca. 60°C aufweist, wenn sie sich im nachgiebigen Zustand befindet.

35. Verfahren nach einem der Ansprüche 29 bis 34, bei dem die Tinte, wenn sie auf der Bildübertragungsoberfläche (14) auf dehnbare Beschaffenheit abgekühlt ist, eine Streckspannung zwischen ca. 460 bis ca. 1190 psi und ca. 60 bis ca. 340 hat, berechnet nach der Gleichung YS = mT + I, in der m ca. -6 ± -2 bis ca. -19 ± -2 psi/°C ist; T ca. 30 - ca. 80°C beträgt und I von ca. 800 ± 100 psi bis ca. 1600 ± 100 psi variiert.

36. Verfahren nach einem der Ansprüche 29 bis 35, bei dem die Tinte nach dem Abkühlen auf der Aufnahmefläche (28) bis zum nachgiebige Zustand eine Streckspannung zwischen ca. 590 bis ca. 1960 psi und zwischen ca. 40 bis ca. 260 psi hat, berechnet nach der Gleichung YS = mT + I, in der m ca. -9 ± -2 bis ca. -36 ± -2 psi/°C ist; T 10 - 60°C beträgt und I von ca. 800 ± 100 psi bis ca. 2200 ± 100 psi variiert.

37. Verwendung eines flüssigen Materials als Überzugsschicht auf einer druckaufnehmenden Oberfläche, die so angeordnet ist, daß sie aus einer Phasenwechseltinte-Zusammensetzung gebildete Druckablagerungen auf darauf angeordneten Druckadressen aufnimmt, wobei die Oberfläche als Übertragungsoberfläche für das kombinierte Kontaktieren der Verformungen mit einem Drucksubstrat wirkt, das als permanent bedruckter Träger gedruckter Information dienen soll.

38. Tintenstrahldrucker, bei dem ein Tintenstrahldruckkopf eine Übertragungsoberfläche adressiert und die Übertragungsoberfläche ein Drucksubstrat adressiert, und bei dem die Übertragungsoberfläche ebenfalls durch ein flüssiges Überzugsmittel der Übertragungsoberflächen adressiert wird, wodurch die Oberfläche mit einer Flüssigkeitsschicht überzogen werden kann, um auf der Oberfläche aus einer Phasenwechseltinten-Zusammensetzung gebildete Tintenstrahldruck-Ablagerungen zu tragen, die durch den Druckkopf auf die Oberfläche adressiert werden.

## Revendications

1. Procédé de formation d'image, ledit procédé comprenant les étapes consistant :

    (a) à appliquer une couche de liquide (12) sur une surface de support (14), la couche de liquide (12) servant de surface de transfert intermédiaire et ayant une surface libre qui n'est pas en contact avec la surface de support (14) et une seconde surface opposée en contact avec la surface de support (14);
    (b) à traiter la surface libre de la couche de liquide (12) pour y former une image (26) constituée d'une composition d'encre à changement de phase; et
    (c) à transférer l'image (26) à un support récepteur (28).

2. Procédé selon la revendication 1, dans lequel les étapes (b) et (c) sont répétées un nombre prédéterminé de fois.

3. Procédé selon la revendication 1, dans lequel un liquide est appliqué sur la surface de support (14) de manière à former une couche de liquide (12) qui a une épaisseur d'environ 0,05 à environ 60 μm.

4. Procédé selon la revendication 3, dans lequel l'épaisseur de la couche de liquide (12) est de 0,1 à 50 μm.

5. Procédé selon la revendication 4, dans lequel l'épaisseur de la couche de liquide (12) est de 1 à 10 μm.

6. Procédé selon l'une quelconque des revendications précédentes, dans lequel le liquide est appliqué à partir d'une source à la couche de liquide (12) sur la surface du support (14) pour renouveler la couche de liquide (12).

7. Procédé selon l'une quelconque des revendications précédentes, dans lequel le liquide de la couche de liquide (12) est de l'eau, une huile fluorée, du glycol, une huile minérale, une huile de silicone, un agent tensioactif, une huile fonctionnelle ou une combinaison de deux ou plusieurs d'entre eux.

8. Procédé selon l'une quelconque des revendications précédentes, dans lequel l'image (26) est formée en faisant passer la composition d'encre à changement de phase d'un état solide à un état fondu, en appliquant ladite composition d'encre à changement de phase à la couche de liquide (12) sous la forme d'une encre liquide et en solidifiant, ou en laissant solidifier, l'encre appliquée pour former une image solide (26) sur la couche de liquide (12).

9. Procédé selon l'une quelconque des revendications précédentes, dans lequel l'encre est appliquée à la couche de liquide (12) par une tête d'impression (11) à jet d'encre.

10. Procédé selon l'une quelconque des revendications précédentes, dans lequel l'encre est une encre comprenant un matériau contenant des amides gras et un colorant compatible.

11. Procédé selon la revendication 10, dans lequel le matériau contenant des amides gras est une composition véhiculaire d'encre à changement de phase contenant un composé de tétraamide et un composé de monoamide tels que la composition du véhicule d'encre à changement de phase soit en phase solide à température ambiante et en phase liquide à température d'exploitation élevée.

**12.** Procédé selon la revendication 11, dans lequel la composition véhiculaire d'encre à changement de phase est une composition comprenant environ 10 à environ 50% en poids d'un composé de tétraamide, environ 30 à environ 80% en poids d'un composé de monoamide secondaire, environ 0 à environ 40% en poids d'un adhévisant, environ 0 à environ 25% en poids d'un plastifiant et environ 0 à environ 10% en poids d'un agent modificateur de viscosité.

**13.** Procédé selon l'une quelconque des revendications précédentes, dans lequel l'encre à changement de phase est appliquée à la couche de liquide (12) sous la forme d'une encre liquide, l'encre liquide appliquée étant refroidie à un état solide malléable tandis qu'elle se trouve sur la couche de liquide (12), formant ainsi un dépôt déformable (26).

**14.** Procédé selon la revendication 13, dans lequel l'encre dudit dépôt déformable (26) est déformée par pression tandis qu'elle se trouve à l'état solide malléable au cours du transfert au support récepteur (28).

**15.** Procédé selon la revendication 13 ou 14, dans lequel l'encre du dépôt déformable (26) a une température d'environ 30 à environ 80°C au cours de son transfert sous forme d'image (26) audit support récepteur (28).

**16.** Procédé selon l'une quelconque des revendications 13 à 15, dans lequel l'encre utilisée dans l'étape de formation d'image est refroidie sur le support récepteur (28) en passant dans un état où elle résiste à la rupture et est ductile à température ambiante.

**17.** Procédé selon la revendication 16, dans lequel l'encre est refroidie sur le support récepteur (28) pour obtenir ledit état de résistance à la rupture et de ductilité et ladite encre est une encre qui est dans un tel état dans une plage de températures allant d'environ -10°C jusque juste en dessous du point de fusion de l'encre.

**18.** Procédé selon l'une quelconque des revendications 13 à 17, dans lequel l'encre du dépôt déformable (26) a, au cours de son transfert sous forme d'image (26) au support récepteur (26), une limite d'élasticité (YS) selon l'équation $YS = mT + l$, dans laquelle m est un nombre d'environ $-6 \pm -2$ à environ $-19 \pm -2$ psi/°C, T est une température d'environ 30 à environ 80°C et l a une valeur d'environ $800 \pm 100$ psi à environ $1600 \pm 100$ psi.

**19.** Procédé selon l'une quelconque des revendications 13 à 18, dans lequel l'encre utilisée dans l'étape de formation d'image est refroidie sur le support récepteur (28) dans un état dans lequel elle résiste à la rupture et est ductile et a une limite d'élasticité (YS) selon l'équation $YS = mT + l$, dans laquelle m est un nombre d'environ $-9 \pm -2$ à environ $-36 \pm -2$ psi/°C; T est une température d'environ 10 à environ 60°C; et l a une valeur d'environ $800 \pm 100$ psi à environ $2200 \pm 100$ psi.

**20.** Appareil destiné à être utilisé à la production d'images et comprenant :

(a) une surface de support (14);
(b) un moyen (16) pour appliquer une couche de liquide (12) à la surface de support (14) afin de créer ainsi sur celle-ci une surface de transfert intermédiaire ayant une première surface en contact avec la surface de support (14) et une seconde surface libre qui n'est pas en contact avec la surface de support (14);
(c) un moyen (11) pour traiter la surface libre de la couche de liquide (12) afin d'y former une image (26) constituée d'une composition d'encre à changement de phase;
(d) des moyens (22, 23) pour transférer l'image (26) à un support récepteur (28).

**21.** Appareil selon la revendication 20, dans lequel la surface de support (14) est un tambour rotatif (14).

**22.** Appareil selon la revendication 21, dans lequel le tambour (14) est monté sur le moyen formateur d'image (11).

**23.** Appareil selon l'une quelconque des revendications 20 à 22, dans lequel le moyen (16) pour appliquer une couche de liquide (12) à la surface du support (14) contient une bande (18) qui peut être déplacée en contact avec la surface de support (14) et hors de contact avec celle-ci.

**24.** Appareil selon l'une quelconque des revendications 20 à 23, dans lequel le moyen formateur d'image (11) comprend une tête d'impression à jet d'encre (11) agencée sélectivement pour éjecter de l'encre.

**25.** Appareil selon la revendication 24, dans lequel le moyen formateur d'image (11) comprend un moyen de chauffage qui est à même de faire fondre une encre solide pour la faire passer de l'état solide à un état fondu avant de l'éjecter de la tête d'impression à jet d'encre (11).

**26.** Appareil selon la revendication 25, comprenant un appareil pour permettre à l'encre appliquée à la surface libre de la couche de liquide (12) de refroidir et de se solidifier à un état malléable.

**27.** Appareil selon la revendication 25 ou 26, comprenant un appareil pour refroidir l'image d'encre transférée et déformée (26) à un état ductile et résistant à la rupture à la température de l'air ambiant.

28. Appareil selon l'une quelconque des revendications 20 à 27, dans lequel les moyens de transfert (22, 23) comprennent un rouleau (22) qui est à même de fusionner sous pression l'image d'encre (26) sur le support récepteur (28) en déformant l'image d'encre (26) et en faisant adhérer l'image d'encre (26) audit support récepteur (28).

29. Procédé de formation d'images, ledit procédé comprenant les étapes consistant :

(a) à former une image sur une surface de transfert liquide (12) par un dépôt d'encre à changement de phase (26) en appliquant de la chaleur pour faire passer l'encre à changement de phase d'un état solide à un état liquide et à appliquer ladite encre liquide à changement de phase à ladite surface (12);
(b) à refroidir l'encre à changement de phase ainsi appliquée de l'état liquide à un état solide malléable;
(c) à transférer le dépôt d'encre à changement de phase resolidifié (26) à l'état malléable sur un support récepteur (28); et
(d) à refroidir le dépôt d'encre à changement de phase (26) sur le support récepteur (28) d'un état ductile à l'état solide de telle sorte que l'encre à changement de phase se déforme sans rupture.

30. Procédé selon la revendication 29, dans lequel le dépôt d'encre à changement de phase (26) est déformé au cours du transfert de la surface de transfert (12) portant l'image au support récepteur (28) et en option fusionné sur celui-ci.

31. Procédé selon la revendication 29, dans lequel le dépôt d'encre à changement de phase (26) est déformé avant le transfert de la surface de transfert (12) portant l'image au support récepteur (28).

32. Procédé selon la revendication 30 ou 31, dans lequel la déformation fait passer le dépôt d'encre à changement de phase (26) à une conformation d'image finale.

33. Procédé selon l'une quelconque des revendications 29 à 32, dans lequel l'encre à changement de phase appliquée au cours de l'étape de formation d'image sur la surface de transfert a une température d'environ 30 à environ 80°C lorsqu'elle se trouve à l'état solide malléable refroidi.

34. Procédé selon l'une quelconque des revendications 29 à 33, dans lequel l'encre à changement de phase sur le support récepteur (28) a une température d'environ 10 à environ 60°C lorsqu'elle se trouve à l'état ductile.

35. Procédé selon l'une quelconque des revendications 29 à 34, dans lequel l'encre, lorsqu'elle est refroidie sur la surface de transfert d'image (14) à l'état malléable a une limite d'élasticité entre environ 460 et environ 1190 psi et entre environ 60 et environ 340 psi calculée selon l'équation $YS = mT + I$, dans laquelle m est égal à environ $-6 \pm -2$ psi/°C à environ $-19 \pm -2$ psi/°C; T est une température d'environ 30 à environ 80°C; et I a une valeur d'environ $800 \pm 100$ psi à environ $1600 \pm 100$ psi.

36. Procédé selon l'une quelconque des revendications 29 à 35, dans lequel l'encre, lorsqu'elle est refroidie à l'état ductile sur la surface réceptrice (28), a une limite d'élasticité entre environ 10°C et environ 60° d'environ 590 à environ 1600 psi et d'environ 40 à environ 260 psi calculée selon l'équation $YS = mT + I$; m est égal à environ $-9 \pm -2$ à environ $-36 \pm -2$ psi/°C; T est une température d'environ 10°C à environ 60°C et I a une valeur d'environ $800 \pm 100$ psi à environ $2200 \pm 100$ psi.

37. Utilisation d'un matériau liquide comme couche de revêtement sur une surface réceptrice d'épreuve agencée pour recevoir des dépôts d'impression formés d'une composition d'encre à changement de phase à des adresses d'impression de celle-ci, ladite surface jouant le rôle de surface de transfert pour mettre en contact interfacial lesdits dépôts avec un substrat d'épreuve destiné à former un support imprimé permanent d'informations imprimées.

38. Imprimante à jet d'encre, dans laquelle une tête d'impression à jet d'encre adresse une surface de transfert et la surface de transfert adresse un substrat d'épreuve et dans laquelle la surface de transfert est adressée également par un moyen d'enduction de liquide de surface de transfert de sorte que ladite surface puisse être revêtue d'une couche de liquide pour acheminer sur ladite surface des dépôts d'impression à jet d'encre formés de la composition d'encre à changement de phase et adressés à ladite surface par ladite tête.

**Fig.1**

**Fig.2**

**Fig.3**